Europäisches Patentamt

**European Patent Office**

Office européen des brevets

(11) Veröffentlichungsnummer: **0 106 994**
**A2**

(12) **EUROPÄISCHE PATENTANMELDUNG**

(21) Anmeldenummer: **83108842.2**

(51) Int. Cl.³: **B 60 C 29/00**

(22) Anmeldetag: **08.09.83**

(30) Priorität: **21.10.82 DE 3238928**

(43) Veröffentlichungstag der Anmeldung: **02.05.84**
**Patentblatt 84/18**

(84) Benannte Vertragsstaaten: **AT BE CH DE FR GB IT LI NL SE**

(71) Anmelder: **Continental Gummi-Werke Aktiengesellschaft, Königsworther Platz 1, D-3000 Hannover 1 (DE)**

(72) Erfinder: **Döring, Heinrich, Elsa-Brandström-Strasse 17, D-3548 Arolsen (DE)**

(54) **Ventil für schlauchlose Zweiradräder.**

(57) Die Erfindung betrifft ein Ventil für schlauchlose Zweiradräder mit einer Tiefbettfelge und ein luftbereiftes Rad mit einem solchen Ventil. Dabei befindet sich das Ventilloch im Grund des Felgentiefbettes. Zur einfachen Montage des Ventils wird vorgeschlagen, daß der Ventilkörper auf der Auslaßseite einen umlaufenden Vorsprung aufweist, der in seinen Außenabmessungen den Innenabmessungen einer Ausnehmung entspricht, die sich im Tiefbettgrund der Felge im Bereich des Ventillochs befindet, so daß der Ventilkörper im montierten Zustand flächenbündig mit dem Tiefbettgrund der Felge abschließt.

EP 0 106 994 A2

0106994

Ventil für schlauchlose Zweiradräder

Beschreibung

Die Erfindung betrifft ein Ventil für schlauchlose Zweiradräder.

Nachdem bei Kraftfahrzeugen schlauchlose Räder seit langem bekannt sind, ist in neuerer Zeit auch die Einführung von Schlauchlosreifen bei Fahrrädern vorgeschlagen worden. Damit ist es erforderlich geworden, ein geeignetes Ventil für eine Schlauchlosradfelge anzugeben. Man könnte daran denken, das bei Autorädern weitverbreitete sogenannte Snap-in-Ventil auch bei Fahrradrädern einzusetzen, doch scheitert dies an dem Raumbedarf des gewölbten Ventilkopfes, der im Innenraum einer Autofelge genügend Platz vorfindet.

Der Erfindung liegt deshalb die Aufgabe zugrunde, ein Ventil für schlauchlose Zweiradräder zu entwickeln, das zum einen zuverlässig dichten, zum anderen aber auch einfach montierbar sein soll.

Diese Aufgabe wird erfindungsgemäß dadurch gelöst, daß der Ventilkörper auf der Auslaßseite einen umlaufenden Vorsprung aufweist, der in seinen Außenabmessungen den Innenabmessungen einer Ausnehmung entspricht, die sich im Tiefbettgrund der Felge im Bereich des Ventillochs befindet, so daß der Ventilkörper im montierten Zustand flächenbündig mit dem Tiefbettgrund der Felge abschließt.

Das erfindungsgemäße Ventil bietet aufgrund der Versenkung im Tiefbettgrund der Felge und des flächenbündigen Abschlusses mit dem Tiefbettgrund den Vorteil, daß es bei der Montage und Demontage eines Reifens in keinster Weise hinderlich ist. Bei schmalen Fahrradfelgen wird weiterhin der Vorteil erzielt, daß der Ventilkörper den Reifenwülsten in der montierten Lage in der Felge nicht im Wege ist.

Das flächenbündige Abschließen des Ventilkörpers mit dem Tiefbettgrund der Felge kann bevorzugt dadurch erreicht werden, daß der

0106994

Ventilkörper auf der Auslaßseite einen ringzylinderförmigen Vorsprung aufweist und daß bei der Felge im Bereich des Ventillochs eine entsprechend gewählte Stufenbohrung vorgesehen wird. Bei dieser ersten bevorzugten Ausführungsform ist der Ventilkörper als sogenanntes Snap-in-Ventil ausgebildet, d.h. er wird durch einfaches Eindrücken ohne jegliche Schraubverbindung an der Felge befestigt. Der Ventilkörper besteht aus einer Metallhülse, in die ein üblicher Ventileinsatz einschraubbar ist, und aus einem gummielastischen Belag, aus dem zumindest der Vorsprung, eine daneben liegende Dichtungsnut und ein sich anschließender Dichtungswulst gefertigt sind. Dabei ist die Dicke des Dichtungswulstes derart gewählt, daß der Ventilkörper nur unter Kraftaufwand von innen durch das Ventilloch der Felge gedrückt werden kann, so daß aufgrund der gummielastischen Eigenschaften des Belags in der Betriebsstellung ein luftdichter Sitz des Ventilkörpers in der Felge gewährleistet ist.

Bei dem vorstehend beschriebenen Ventilkörper kann die Metallhülse über ihre gesamte Länge den gleichen Durchmesser aufweisen und bis zum Ende des Vorsprungs aus Gummi reichen. Sie kann aber auch im Bereich des Vorsprungs einen größeren Durchmesser aufweisen, so daß eine erhöhte Sicherheit gegen ein gewaltsames Herausreißen des Ventilkörpers aus der Felge erzielt wird. Wenn man Wert darauf legt, daß der Innendruck eines aufgepumpten Reifens an der Dichtwirkung des Ventilkörpers teilnimmt, kann man die Metallhülse bereits im Bereich der Dichtungsnut enden lassen.

Gemäß einer weiteren bevorzugten Ausführungsform besteht der Ventilkörper ausschließlich aus Kunststoff, und er wird mittels eines Wulstes nach dem Eindrücken in das Ventilloch der Felge an letzterer fixiert. Zur Erzielung eines luftdichten Abschlusses befindet sich zwischen der Kreisringfläche des Vorsprungs und der Felge ein O-Dichtring.

Nach einer weiteren bevorzugten Ausführungsform besteht der Ventilkörper ausschließlich aus Metall, und es wird wiederum zur Dichtung ein Dichtring verwendet. Die Befestigung an der Felge erfolgt durch Verschraubung mit Hilfe eines Innengewindes, das sich in der Felgendurchführung befindet. Alternativ kann statt des Innengewindes an der Felge eine Zweiteilung des Ventilkörpers in eine Halteplatte mit Bund und in einen Schaft vorgesehen werden, so daß zur Befestigung des Ventilkörpers an der Felge diese beiden Teile miteinander verschraubt werden.

Nachfolgend werden mehrere Ausführungsbeispiele eines Ventils anhand einer Zeichnung näher erläutert. In der Zeichnung sind aus Gründen der Übersichtlichkeit die Ventileinsätze, die man auf übliche Weise in die Ventilkörper einschrauben kann, nicht mitgezeichnet.

Es zeigt jeweils in einem radialen bzw. vertikalen Teilschnitt schematisch

Fig. 1 eine Felge mit einem Ventilkörper aus einer Metallhülse und einem Gummibelag in Snap-in-Ausführung,

Fig. 2 den Ventilkörper gemäß Fig. 1, jedoch mit verkürzter Metallhülse,

Fig. 3 den Ventilkörper gemäß Fig. 1, jedoch mit einem vergrößerten Durchmesser der Metallhülse im Bereich des Vorsprungs,

Fig. 4 eine Felge mit einem Ventilkörper aus Kunststoff in Snap-in-Ausführung und mit einem Dichtring zwischen Felge und Ventilkörper,

Fig. 5 eine Felge mit einem Ventilkörper aus Metall, die Abdichtung erfolgt durch Dichtring und Verschraubung,

Fig. 6 einen zweigeteilten Ventilkörper aus Metall.

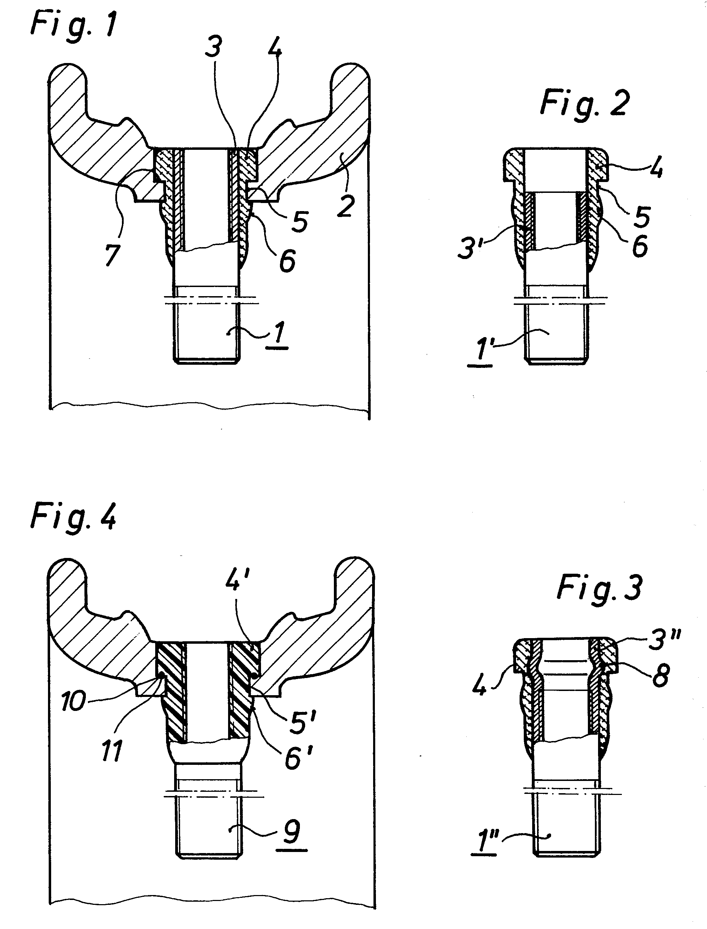

Der in Fig. 1 dargestellte Ventilkörper 1 befindet sich in einer Durchführung durch die Felge 2 in der Mitte des Tiefbettes. Der Ventilkörper 1 besteht aus einer inneren Metallhülse 3 mit einem Innengewinde zum Einschrauben eines Ventileinsatzes und weiterhin aus einem Gummibelag, der im oberen Bereich der Metallhülse 3 festhaftend mit ihr verbunden ist. Von dem Gummibelag wird ein ringzylinderförmiger Vorsprung 4 gebildet, der mit der Metallhülse 3 endet und dem sich auf der anderen Seite eine Dichtungsnut 5 und ein Dichtungswulst 6 anschließen.

Die Außenabmessungen des Vorsprungs 4 entsprechen den Innenabmessungen einer Ausnehmung in der Felge 2, vorliegend einer Stufenbohrung 7, so daß der Ventilkörper 1 nach der Montage flächenbündig mit dem Tiefbettgrund abschließt. Auch bei anders gewählter, z.B. kegeliger Ausnehmung ist es wichtig, daß das flächenbündige Abschließen erhalten bleibt. Die Wanddicke des Gummibelags im Bereich der Dichtungsnut 5 und des Dichtungswulstes 6 ist derart gewählt, daß zum einen der Ventilkörper 1 sich ohne Materialbeschädigung in das Ventilloch hineindrücken läßt und daß zum anderen der Gummi in der Betriebslage des Ventilkörpers 1 mit genügender Kraft gegen die Felge 2 drückt, so daß eine zuverlässige Dichtwirkung erzielt wird.

Der Ventilkörper 1' nach Fig. 2 unterscheidet sich von dem vorstehend beschriebenen dadurch, daß die Metallhülse 3' bereits im Bereich der Dichtungsnut 5 oder sogar des Dichtungswulstes 6 endet, so daß bei aufgepumptem Rad der Innenluftdruck die Dichtfunktion der Dichtungsnut 5 bzw. des Dichtungswulstes 6 am Ventilkörper 1' unterstützt.

Beim Ventilkörper 1" gemäß Fig. 3 ist im Unterschied zu dem nach Fig. 1 die Metallhülse 3" im Bereich des Vorsprungs 4 mit einer Verdickung 8 größeren Durchmessers versehen, so daß die Sicherheit gegen ein gewaltsames Herausziehen des Ventilkörpers 1" vergrößert wird.

In Fig. 4 ist eine Felge 2 mit einem Ventilkörper 9 aus Kunststoff in Snap-in-Ausführung dargestellt, bei dem sich unterhalb eines Vorsprungs 4' wiederum eine Nut 5' und ein Wulst 6' befinden. Zur Erzielung einer zuverlässigen Abdichtung liegt ein O-Dichtring 10

0106994

zwischen der Kreisringfläche des Ventilkörpervorsprungs 4' und der Felge 2. Für eine gute Lagefixierung des Dichtrings 10 können Ringnuten 11 im Vorsprung 4' und in der Felge 2 vorhanden sein.

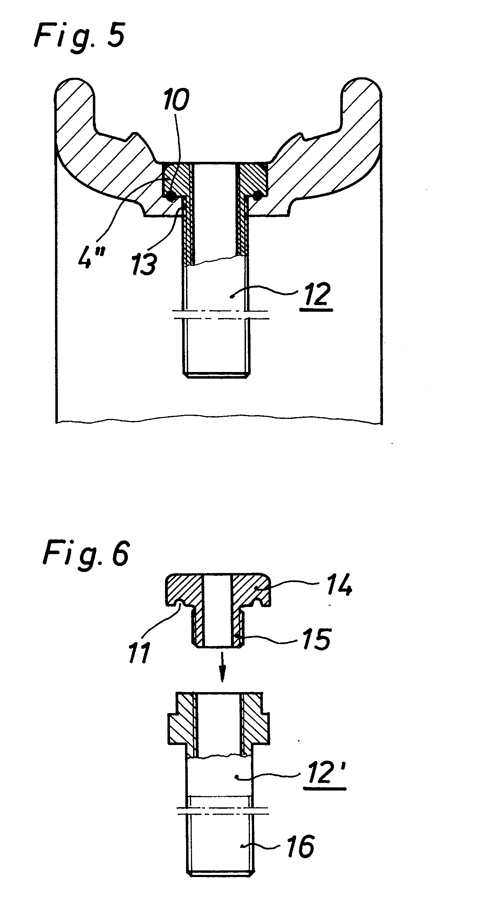

Fig. 5 zeigt eine Felge mit einem eingesetzten Ventilkörper 12 aus Metall, der am Ende einer Hülse 3 wiederum einen Vorsprung 4" aufweist. Die Befestigung an der Felge 2 erfolgt durch Verschraubung, wobei zur Einsparung einer Sechskantmutter die Felgendurchführung ein Innengewinde 13 aufweist, das gegebenenfalls bereits beim Gießen eingearbeitet werden kann. Die **Dichtfunktion** übernimmt wieder ein Dichtring 10.

Der Ventilkörper 12' nach Fig. 6 unterscheidet sich von dem vorstehenden durch eine Zweiteilung in eine einen Vorsprung bildende Halteplatte 14 mit Bund 15 und in einen Schaft 16. Die Befestigung an der Felge 2 erfolgt durch Verschraubung der beiden Teile, die Abdichtung durch einen Dichtring im Bereich der Ringnut 11. Es ist darauf zu achten, daß der Schaftdurchmesser im an der Felge angrenzenden Bereich größer ist als der des Ventillochs in der Felge 2. Statt einer Verschraubung des Bundes 15 mit dem Schaft 16 kann auch eine Snap-in-Verbindung vorgesehen werden, z.B. in der Weise, daß der Schaft 16 innen umlaufende Nuten aufweist, in die Wülste des Bundes 15 eingreifen.

Die Ventilkörper nach Fig. 5 und Fig. 6 können selbstverständlich auch aus einem geeigneten Kunststoff hergestellt sein.

- 7 -

0106994

### Ansprüche

1. Ventil für schlauchlose Zweiradräder mit einer Tiefbettfelge, dadurch gekennzeichnet, daß der Ventilkörper (1, 1', 1", 9, 12, 12') auf der Auslaßseite einen umlaufenden Vorsprung (4, 4', 4") aufweist, der in seinen Außenabmessungen den Innenabmessungen einer Ausnehmung entspricht, die sich im Tiefbettgrund der Felge (2) im Bereich des Ventillochs befindet, so daß der Ventilkörper (1, 1', 1", 9, 12, 12') im montierten Zustand flächenbündig mit dem Tiefbettgrund der Felge (2) abschließt.

2. Ventil nach Anspruch 1, dadurch gekennzeichnet, daß der Vorsprung (4, 4', 4") ringzylinderförmig ausgebildet ist.

3. Ventil nach Anspruch 1, dadurch gekennzeichnet, daß der Ventilkörper (1, 1', 1", 9) als Snap-in-Ventil ausgebildet ist.

4. Ventil nach Anspruch 3, dadurch gekennzeichnet, daß der Ventilkörper (1, 1', 1") aus einer Metallhülse (3, 3', 3") und einem gummielastischen Belag besteht und daß zumindest der am Ende des Ventilkörpers (1, 1', 1" ) befindliche Vorsprung (4), eine daneben liegende Dichtungsnut (5) und ein sich anschließender Dichtungswulst (6) aus dem gummielastischen Material gefertigt sind.

5. Ventil nach Anspruch 4, dadurch gekennzeichnet, daß die Metallhülse (3, 3") am Auslaßende des Ventils flächenbündig mit dem Vorsprung (4) endet.

6. Ventil nach Anspruch 4, dadurch gekennzeichnet, daß die Metallhülse (3') im Bereich der Nut (5) oder des Wulstes (6) endet.

7. Ventil nach Anspruch 4, dadurch gekennzeichnet, daß die Metallhülse (3") im Bereich des Vorsprungs (4) radial außen eine Verdickung (8) aufweist.

8. Ventil nach den Ansprüchen 1 bis 3, dadurch gekennzeichnet, daß der Ventilkörper (9) ausschließlich aus Kunststoff besteht, daß er mittels eines an der Kreisringfläche des Vorsprungs (4') anbringbaren Dichtrings (10) montierbar ist und mittels eines unterhalb einer umlaufenden Nut (5') befindlichen umlaufenden Wulstes (6') an der Felge (2) fixierbar ist.

9. Ventil nach den Ansprüchen 1 und 2, dadurch gekennzeichnet, daß es im Bereich der Kreisringfläche des Vorsprungs (4") einen Dichtring (10) aufweist und daß es mittels einer Sechskantmutter oder mittels eines Innengewindes (13) in der Felgendurchführung an der Felge (2) montierbar ist.

10. Ventil nach den Ansprüchen 1 und 2, dadurch gekennzeichnet, daß der Ventilkörper (12') zweigeteilt ist, daß der erste Teil den umlaufenden Vorsprung in Form einer Halteplatte (14), einen daran anbringbaren Dichtring sowie einen Bund (15) umfaßt und daß der zweite Teil aus einem Schaft (16) besteht, der mit dem ersten Teil verschraubbar ist.

11. Luftbereiftes Rad für Zweiräder mit einem schlauchlosen Reifen und einer Tiefbettfelge mit Ventil, bei der sich das Ventilloch im Grund des Tiefbettes befindet, dadurch gekennzeichnet, daß der Ventilkörper (1, 1', 1", 9, 12, 12') auf der Auslaßseite einen umlaufenden Vorsprung (4, 4', 4") aufweist, der in seinen Außenabmessungen den Innenabmessungen einer Ausnehmung entspricht, die sich im Tiefbettgrund der Felge (2) im Bereich des Ventillochs befindet, so daß der Ventilkörper (1, 1', 1", 9, 12, 12') im montierten Zustand flächenbündig mit dem Tiefbettgrund der Felge (2) abschließt.

12. Luftbereiftes Rad nach Anspruch 11, gekennzeichnet durch einen Ventilkörper (1, 1', 1", 9, 12, 12') mit den Merkmalen eines oder mehrerer der vorstehenden Ansprüche.

Hannover, den 11. Oktober 1982

Sr/Fr            82-58 P/Sr

0106994

Fig. 1

3   4

7

5

6

2

1

Fig. 2

4

3'

5

6

1'

Fig. 4

4'

10

11

5'

6'

9

Fig. 3

3"

4

8

1"

0106994

**Fig. 5**

**Fig. 6**